# FASCICULE DE BREVET EUROPEEN

(11) **EP 3 727 788 B1**
(45) Date de publication et mention de la délivrance du brevet: **25.08.2021**
(21) Numéro de dépôt: 18826362.8
(22) Date de dépôt: 20.12.2018
(51) Int. Cl.: B29C 45/00, B60R 19/52, B60K 11/08

(54) **UNITÉ DE CACHE POUR UN VÉHICULE À MOTEUR**
ABSCHIRMUNGSEINHEIT FÜR EIN KRAFTFAHRZEUG
SHIELDING UNIT FOR A MOTOR VEHICLE

(30) Priorité: 21.12.2017 FR 1762793
(43) Date de publication de la demande: 28.10.2020
(73) Titulaire: Compagnie Plastic Omnium, 69007 Lyon (FR)
(72) Inventeur: FLOTZINGER, Franz, 82291 Mammendorf (DE)
(74) Mandataire: LLR
(86) Numéro de dépôt international: PCT/EP2018/086408
(87) Numéro de publication internationale: WO 2019/122247

(56) Documents cités:
- FR-A1- 2 873 071
- FR-A1- 2 927 034
- JP-A- 2001 071 840
- JP-A- 2015 227 116

## Description

L'invention concerne une unité de cache, en particulier une unité de grille de radiateur, pour un véhicule à moteur, ainsi qu'un procédé de montage d'une unité de cache de ce type sur un véhicule à moteur.

Les véhicules à moteur présentent généralement à l'avant et à l'arrière un système de pare-chocs s'étendant sur la largeur du véhicule qui comporte une ou plusieurs ouvertures. Des grilles ou pièces de cache sont agencées dans cette ou ces ouverture(s) et sont par exemple reliées à la structure du système de pare-chocs par clipage. Par les ouvertures agencées dans une grille de radiateur, de l'air peut être dirigé vers un radiateur principal ou vers d'autres composants du véhicule à moteur à refroidir, comme par exemple un ou plusieurs refroidisseurs ou autres agrégats auxiliaires, etc.

Avec la généralisation la popularité croissantes des véhicules à moteur toujours plus volumineux, notamment plus larges et toujours plus puissants, en particulier les voitures particulières agencées en SUV, les dimensions de largeur des grilles de radiateur respectivement utilisées augmentent également, lesquelles peuvent s'étendre sensiblement sur l'ensemble de la largeur du véhicule, le plus souvent en formant plusieurs grilles.

Si l'on forme une grille de radiateur d'un véhicule à moteur large de ce type sous la forme d'un composant monobloc, l'on est confronté à un problème : en raison des écarts de mesure causées par les tolérances de fabrication de la grille de radiateur et/ou du système de pare-chocs, il peut être extrêmement difficile d'installer et de monter sur mesure la grille de radiateur. Il se peut également, en raison des écarts de mesure et/ou de différentes dilatations des matériaux en cas de variations de température, que des fentes visibles se forment entre la grille de radiateur et le système de pare-chocs, celles-ci pouvant véritablement nuire à l'aspect visuel du véhicule à moteur.

Afin d'éviter ces problèmes, en particulier pour les SUV, la grille de radiateur est généralement constituée de plusieurs éléments de grille individuels, séparés les uns des autres, qui sont montés et reliés individuellement et séparément à la structure de pare-chocs, au niveau des ouvertures respectives.

Le fait d'utiliser sur un véhicule plusieurs éléments indépendants de grille de radiateur, comme environ deux, trois, ou plus, éléments de grille pour un SUV implique cependant que ces différents éléments de grilles doivent être fabriqués, conditionnés, transportés, stockés, gérés (sur le plan technique, par des références de composants indépendantes), préparés et intégrés, ce qui entraîne des investissements accrus en systèmes d'information et en moyens logistiques, ce qui renchérit d'autant les coûts. Le document FR 2 927 034 A1 décrit une unité de cache selon le préambule de la revendication 1. Le document JP 2001 071840 A décrit un procédé de montage d'une grille de radiateur en deux éléments.

L'objet de la présente invention est donc de présenter une unité de cache, en particulier une unité de grille de radiateur grâce à laquelle les problèmes énumérés ci-dessus peuvent être surmontés.

La présente invention a notamment pour objet de présenter une unité de cache, en particulier une unité de grille de radiateur impliquant de faibles investissements logistiques et permettant simultanément un montage simple et sur mesure.

Afin de résoudre cette tâche, ainsi que d'autres, on présente une unité de cache destinée à être montée sur un véhicule à moteur, l'unité de cache comportant les caractéristiques de la revendication 1.

Une unité de cache à monter sur un véhicule à moteur est présentée en tant que solution, l'unité de cache comportant au moins deux éléments de cache, l'unité de cache étant agencée d'un seul tenant, et deux éléments de cache adjacents aux au moins deux éléments de cache sont reliés l'un à l'autre de manière détachable à l'aide d'une section de liaison.

L'unité de cache peut ainsi être fabriquée simplement en tant que composant monobloc et manipulée simplement d'un point de vue logistique. Pour le montage, la liaison peut être détachée très simplement, en particulier par déchirage des languettes déchirables. De cette manière, l'unité de cache est soulevée et les différents éléments de cache peuvent être montés individuellement et séparément de manière simple et précise. Étant donné que les éléments de cache sont désormais individualisés et séparés, il n'y a plus qu'un faible risque, voire plus de risque du tout, que se forment des fentes liées aux variations de température.

L'unité de cache peut être en particulier et de manière préférée une unité de grille de radiateur à monter sur un système de pare-chocs se trouvant au niveau de l'avant d'un véhicule à moteur, les éléments de cache étant formés en tant qu'éléments de grille. Dans le cas des unités de grilles de radiateur de grande taille en particulier, telles qu'elles sont souvent utilisées sur les SUV par exemple, cela permet d'améliorer nettement les manipulations.

Conformément à l'invention, la section de liaison présente une languette déchirable, le déchirage de la languette déchirable provoquant le détachement de la liaison. Afin que le déchirage de la languette déchirable soit très simple, la languette déchirable peut de plus comporter de préférence un anneau de saisie ou un dispositif similaire.

De manière préférée, la section de liaison est réalisée sous la forme d'une charnière-film ou comprend une section partielle réalisée sous la forme d'une charnière-film, la languette déchirable étant en outre réalisée de préférence sous la forme d'une section de la charnière-film définie par des perforations et/ou des rainures. Une configuration de ce type permet d'une part d'obtenir une cohésion fiable de l'unité de cache, en particulier de l'unité de grille de radiateur, en tant qu'unité, la flexibilité conférée par la charnière-film permettant un montage simplifié sur un véhicule, en particulier dans un système de pare-chocs d'un véhicule à moteur.

La languette déchirable possède de manière préférée une longueur comprise entre 3 et 15 cm, de manière davantage préférée une longueur comprise entre 5 et 10 cm. Une languette déchirable aux dimensions de ce type peut d'une part garantir une liaison sûre, et peut être enlevée par un ouvrier sans nécessiter une grande force ou de grands efforts de mouvement.

Afin d'empêcher, par exemple au cours du transport de l'unité de grille de radiateur, de se retrouver dans des situations (causées par une manipulation incorrecte de l'unité de grille de radiateur) qui entraîneraient une torsion des éléments de grille l'un par rapport à l'autre autour d'un axe qui correspond à l'axe transversal d'un véhicule, qui pourraient déboucher sur un déchirage indésirable et prématuré, partiel ou complet, de la languette déchirable, il peut être prévu de manière davantage préférée des moyens de protection contre une déchirure de ce type, indésirable et prématurée, de la languette déchirable.

Ces moyens peuvent être réalisés sous la forme d'une pince en « U », laquelle présente un élément supplémentaire et peuvent par exemple être fabriqués en métal. La pince en « U » est enfichée sur la languette déchirable et sur une zone adjacente de la section de liaison respectivement latérale à la languette déchirable, la pince en « U » contrant, en état enfiché, une torsion des éléments de grilles (liés entre eux par la section de liaison) les uns par rapport aux autres, la pince en « U » pouvant être retirée afin de libérer la languette déchirable pour déchirer celle-ci. De cette manière, la pince en « U » supplémentaire forme une sécurité contre la torsion et donc contre une déchirure involontaire et prématurée de la languette déchirable.

En variante, les moyens de protection contre un détachement involontaire de la languette déchirable peuvent comporter une pluralité de traverses qui s'étendent de manière sensiblement parallèle à la languette déchirable, au moins une des traverses étant agencée sur chacun des éléments de cache reliés les uns aux autres par la section de liaison, et les traverses agencées se chevauchant au moins partiellement sur les éléments de cache reliés et étant écartés afin d'entrer en contact les unes par rapport aux autres en cas de torsion des éléments de cache reliés entre eux, afin de contrer une torsion supplémentaire.

En autre variante, les moyens de protection contre le détachement involontaire de la languette déchirable peuvent comporter une pluralité d'éléments en forme de plaque, qui sont reliés entre eux par des sections de charnière-film.

L'unité de cache, en particulier l'unité de grille de radiateur, est constituée de préférence de matière plastique. Par exemple, celle-ci est donc particulièrement facile à fabriquer par moulage par injection et se caractérise par un poids relativement faible. En outre, des éléments d'encliquetage de grille peuvent être prévus ou appliqués sur l'unité de grille de radiateur afin qu'elle s'imbrique avec une partie complémentaire du système de pare-chocs.

Dans un procédé de montage d'une unité de cache telle que décrite dans la description, en particulier une unité de grille de radiateur, l'on fournit d'abord une unité de cache, la/les liaison(s) détachables entre le premier élément de grille et le second, respectivement chacun, des autres éléments de grille latéraux sont détachées en déchirant la languette, et l'on effectue l'insertion et le montage du premier élément de grille et des éléments de grille latéraux dans les ouvertures du système de pare-chocs prévus pour les recevoir. À ce titre, le détachement de la/des liaison(s) détachable(s) peut s'effectuer après la fourniture et avant l'insertion et le montage de l'élément de grille central et des éléments de grille latéraux, par exemple en ce que l'unité de grille de radiateur est placée sur une table de travail et un ouvrier déchire les languettes déchirables, pour ensuite retirer les différents éléments de grille de la table de travail et les monter.

En variante et de manière préférée, il est également possible de procéder pour que l'élément de grille central soit d'abord inséré et monté dans l'ouverture du système de pare-chocs prévue pour le recevoir, pour seulement ensuite détacher la liaison entre le premier élément de grille latéral et l'élément de grille central, et ensuite insérer et monter le premier élément de grille latéral dans l'ouverture du système de pare-chocs prévue pour le recevoir. Ensuite, la liaison entre le second élément de grille latéral et l'élément de grille central peut être détachée et le second élément de grille latéral peut être inséré et monté dans l'ouverture du système de pare-chocs prévue pour le recevoir. Il est particulièrement avantageux, avec ce procédé, que les sections de liaison soient configurées sous la forme de charnière-film ou comprennent des sections partielles configurées sous la forme de charnière-film, de sorte que les éléments de grille latéraux soient reliés de manière flexible à l'élément de grille central et puissent être déplacés ou pivotés par rapport à celui-ci, de sorte que le montage de l'élément de grille central soit possible sans que les éléments de grille latéraux encore reliés y fassent obstacle. Ce procédé a pour avantage que l'ouvrier en charge du montage peut recevoir facilement l'unité de grille de radiateur, insérer et monter simplement les différents éléments de grille de manière successive, sans avoir à se déplacer de manière répétée entre le véhicule et la table de travail.

La description détaillée ci-dessous et les schémas en annexe présenteront d'autres caractéristiques de l'invention. Ils représentent :
- Fig. 1 :: schéma d'une unité de grille de radiateur selon l'un des modes de réalisation ;
- Fig. 2 :: schéma d'une configuration d'une section de liaison de l'unité de grille de radiateur de la figure 1. ;
- Fig. 3 :: schéma de configurations possibles d'une section de prise d'une languette déchirable ;
- Fig. 4 :: schéma de la section de liaison de la Fig. 2 avec une pince en « U » pour empêcher une torsion ;
- Fig. 5 :: schéma d'une pluralité de traverses configurées au niveau de la section de liaison pour empêcher une torsion ;
- Fig. 6 :: schéma d'une autre configuration d'une section de liaison de l'unité de grille de radiateur de la figure 1. ; et
- Fig. 7 :: schéma d'une pluralité d'éléments en forme de plaque pour empêcher la rotation, reliés aux sections de charnière-film, prévus au niveau de la section de liaison.

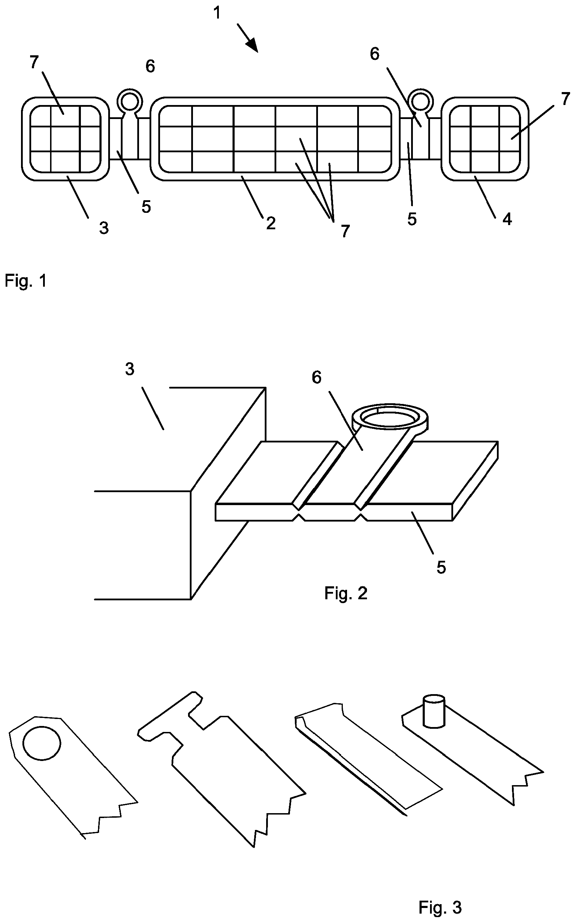

En se référant à la Fig. 1, nous allons maintenant décrire un mode de réalisation préféré d'une unité de cache comportant plusieurs éléments de cache, dans lequel l'unité de cache est réalisée sous la forme d'une unité de grille de radiateur 1 comportant plusieurs éléments de cache sous la forme d'éléments de grille 2, 3, 4.

Comme le montre la Fig. 1, l'unité de grille de radiateur 1 comporte trois éléments de grille 2, 3, 4. Les éléments de grille 2, 3, 4, peuvent par exemple, comme représenté, être disposés l'un par rapport à l'autre dans une direction latérale, correspondant à la direction latérale ou direction de la largeur d'un véhicule à moteur (non-représenté), sur lequel l'unité de grille de radiateur 1 doit être montée. Par conséquent, la Fig. 1 présente un premier élément de grille 2 disposé au centre, sur son côté gauche un deuxième élément de grille 3, ainsi que sur son côté droit un troisième élément de grille 4. Conformément aux configurations des trois éléments de grille 2, 3 et 4, une structure de pare-chocs (non-représentée), généralement maintenue dans la couleur de la voiture ou en noir, est pourvue de trois ouvertures, dans lesquelles les éléments de grille 2, 3 et 4 respectifs de l'unité de grille de radiateur 1 doivent être respectivement insérés et montés. La fixation peut être effectuée avec une technique connue en soi, comme par exemple par clipage à l'aide d'éléments d'encliquetage de grille (non-représentés) prévus par conséquence au niveau des éléments de grille 2, 3 et 4 respectifs, par vissage, rivetage, collage ou soudage. Les éléments de grille 2, 3 et 4 sont respectivement constitués de plastique afin de former une structure stable et présentent des passages 7 conformément aux exigences de composants de véhicules à refroidir, se trouvant, dans un état monté sur le véhicule, derrière les éléments de grille 2, 3, 4 de l'unité de grille de radiateur 1.

Les éléments de grille 2, 3 et 4 sont reliés entre eux par des sections de liaison 5 respectives, de sorte que l'unité de grille de radiateur 1 est formée d'un seul tenant. Dans le même temps, les sections de liaison 5 sont formées de telle sorte que la liaison établie à l'aide des sections de liaison 5 peut être détachée, en ce que les languettes déchirables 6 sont formées dans les sections de liaison 5, par exemple comme dans la Fig. 1. Il est donc possible pour un ouvrier de saisir et de déchirer les languettes déchirables, afin de détacher et de soulever de la sorte le lien établi par les liaisons 5, afin d'ainsi décomposer l'unité de grille de radiateur 1 en les différents éléments de grille 2, 3 et 4. Les éléments de grille 2, 3, 4 désormais séparés et individualisés peuvent ensuite être insérés et montés de manière connue en soi dans les ouvertures respectives correspondantes de la structure de pare-chocs (non-représentée).

En se référant à la Fig. 2, nous allons maintenant décrire une configuration possible de la section de liaison 5. Comme représentée sur la Fig. 2, la section de liaison 5 est par exemple configurée entre le premier élément de grille 2 (non-représenté sur la Fig. 2) et le second élément de grille 3, sous la forme d'une section relativement mince et plate, qui est par exemple formée d'un seul tenant avec le deuxième élément de grille 3 et l'élément de grille central 2 (non-représenté sur la Fig. 2) par moulage par injection de plastique. La section mince et plate formant la section de liaison 5 possède de manière préférée une épaisseur comprise entre 1 et 8 mm, de manière préférée comprise entre 2 et 5 mm. De cette manière, la section mince et plate formant la section de liaison 5 peut de manière préférée former une charnière-film, qui permet un basculement du premier élément de grille latéral 3 et de l'élément de grille central 2 l'un par rapport à l'autre autour d'un axe qui correspond à l'axe de profondeur dans la représentation de la Fig. 2. Cela peut permettre de faciliter la manipulation lors du montage de l'unité de grille de radiateur 1.

Ainsi, le premier élément de grille central 2 peut par exemple être monté dans l'ouverture du système de pare-chocs prévue à cet effet, avec le deuxième élément de grille latéral 3 relié à la suite de cela, tandis que la section de liaison 5 formant une charnière-film permet un déplacement, en particulier un basculement du deuxième élément de grille latéral 3, de sorte que celui-ci ne s'oppose pas à l'insertion et au montage du premier élément de grille central 2.

Comme représenté sur la Fig. 2, des encoches sont de plus formées dans la section de liaison 5 formant la charnière-film, lesquelles définissent la languette déchirable 6 et le long desquelles la languette déchirable 6 peut être déchirée. En variante, ou en tant que suppléments pour les encoches représentées, il peut être prévu des perforations connues en soi, lesquelles définissent les bords de déchirure de la languette déchirable 6.

De manière avantageuse, comme d'ailleurs représenté dans la Fig. 2, la languette déchirable 6 est formée avec un anneau de saisie, afin que la saisie et le déchirage soient simples. Ceci ne présente pas de caractère limitatif et l'on peut prévoir d'autres configurations permettant une saisie et un déchirage simples. La Fig. 3 illustre quelques exemples d'autres configurations.

Afin d'éviter que les éléments de grille 2, 3, 4 ne se déplacent les uns par rapport aux autres (comme cela peut par exemple arriver lors du transport ou lors d'une autre manipulation de l'unité de grille de radiateur 1), en particulier ne se tordent autour d'un axe longitudinal de l'unité de grille de radiateur 1 - correspondant à la direction de la largeur du véhicule à moteur ; qu'un couple exercé à cette occasion sur la section de liaison 5 et ainsi sur la languette déchirable 6 n'entraîne un détachement et/ou la déchirure involontaire, prématurée (partielle ou totale) de la languette déchirable 6, il peut être prévu d'autres moyens de protection contre le détachement non-intentionnel de la languette déchirable 6.

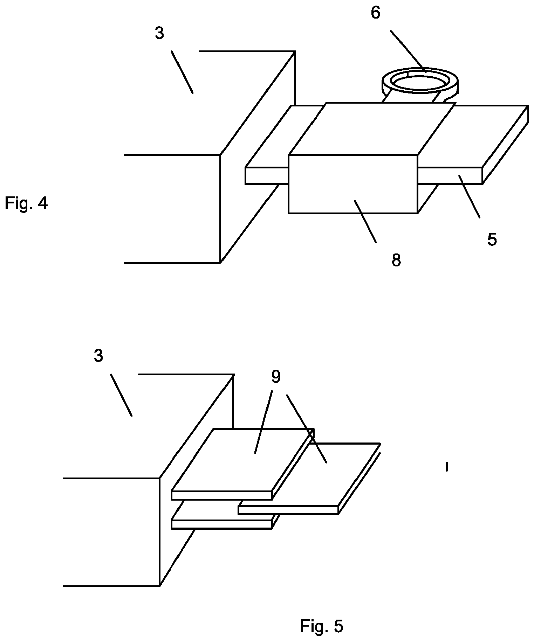

Ainsi, il est par exemple possible, comme représenté sur la Fig. 4, de protéger la languette déchirable 6 contre un détachement et un déchirage non-intentionnel en fournissant une pince en « U » 8, laquelle déborde sur la languette déchirable 6 et sur la zone adjacente à celle-ci de la section de liaison 5. Une pince en « U » de ce type 8 peut constituer une protection contre la torsion, en la contrant, et empêche que des éventuels effets de couple ne s'exercent sur la languette déchirable et n'entraînent un détachement ou une déchirure de celle-ci.

Comme représenté sur la Fig. 5, il est également concevable, en variante ou en complément, de réaliser une protection contre la torsion de sorte qu'une pluralité de traverses 9 soient prévues, qui sont formées à tour de rôle sur l'élément de grille latéral 3, 4 et sur l'élément de grille central 2, et qui se chevauchent partiellement avec un écart prédéfini. À ce titre, les traverses 9 sont de manière préférée disposées parallèlement les unes aux autres et/ou en parallèle de la languette déchirable 6 (non-représentée dans la Fig. 5). Par exemple, les traverses 9 peuvent être disposées derrière et/ou à côté de la languette déchirable 6. Si, avec une configuration de ce type, des effets de couple se produisent entre deux éléments de grille 2, 3 ou 3, 4 reliés entre eux, les traverses 9 viennent en contact et se touchent en raison de la torsion des traverses 9 les unes par rapport aux autres causée pour cette raison, de sorte que des éventuels effets de couple sont encaissés et ainsi contrés par les traverses 9. De cette manière, il est également possible d'empêcher de manière sûre un détachement et/ou déchirure non-intentionnelle de la/des languette(s) déchirable(s) 6. Les traverses 9 peuvent être formées d'un seul tenant avec l'élément de grille 2, 3, 4 (c.-à-d. indifféremment le ou les élément(s) de grille central ou latéral/-aux), également par moulage par injection de plastique grâce à un arrangement correspondant de l'outil de moulage, ce qui rend leur formation particulièrement facile.

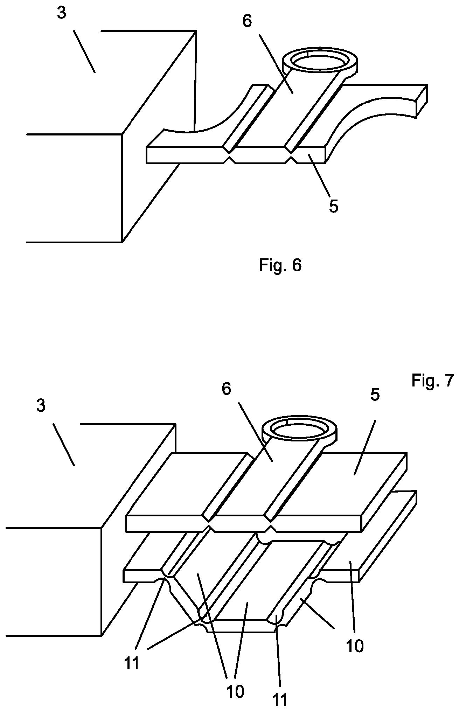

Dans une variante encore différente, il est également concevable, en variante ou en complément, de réaliser une protection contre la torsion de sorte à ce que, comme indiqué sur la Fig. 7, une pluralité d'éléments en forme de plaque 10 soient prévus, qui sont reliés entre eux par des sections de charnière-film 11, afin de relier les éléments de grille 2, 3 de manière à ce que les éléments en forme de plaque 10 reliés aux sections de charnière-film 11 permettent un déplacement longitudinal et latéral des éléments de grille 2, 3 les uns par rapport aux autres, mais contrent toutefois une torsion des éléments de grille 2, 3 les uns par rapport aux autres.

Les exemples de réalisation des Fig. 4 à 7 montrent donc différents exemples de moyens de protection contre le déclenchement non-intentionnel de la languette déchirable 6, lesquels réalisent un type de protection contre la torsion, qui contre une torsion des éléments de grille 2, 3, 4 les uns par rapport aux autres, partant, obtiennent l'effet d'un raidissement, et empêchent ainsi de manière sûre un détachement et/ou déchirure non-intentionnel(le) de la/des languette(s) déchirable(s) 6. Ces exemples de réalisation ne présentent toutefois pas de caractère limitatif et il est également possible d'utiliser d'autres arrangements qui ont pour effet une protection et/ou raidissement similaire contre la torsion.

Au lieu de prévoir un tel type de protection contre la torsion et/ou de raidissement, ou en complément à cela, il est également possible d'arranger la section de liaison 5 pour que celle-ci présente une certaine flexibilité par rapport à ce type de torsion des éléments de grille 2, 3, 4 les uns par rapport aux autres, lesquels sont reliés entre eux par la section de liaison 5. Comme représenté sur la Fig. 6, il peut par exemple être prévu de former la section de liaison 5 en tant que charnière-film, de manière semblable au mode de réalisation de la Fig. 2, des évidements étant dans ce cas prévus à l'extérieur de la section déchirable 6 dans la section mince et plate qui forme l'élément de liaison 5, les évidements tels que représentés sur la Fig. 6 étant formés de manière particulièrement préférée sur les côtés opposés dans la direction de la largeur de l'élément de liaison 5 (correspondant à l'axe de la profondeur dans la représentation de la Fig. 6). À ce titre, il est particulièrement avantageux que les évidements soient dimensionnés de manière à ce qu'une largeur minimale (correspondant à l'axe de la profondeur dans la représentation de la Fig. 6) définie par un évidement respectif corresponde à une valeur de la plage comprise entre 5 et 40 %, de manière préférée la plage comprise entre 10% et 30 %, de manière particulièrement préférée entre 10 % et 25 % de la longueur du bord de déchirure de l'élément déchirable 6. Un arrangement de ce type permet à l'élément de liaison 5 de se déformer de manière rotative dans les sections rétrécies définies par les évidements, sans que cela n'entraîne de trop grands effets de couple sur les bords de déchirure (comparés à d'autres ayant une longueur supérieure, et donc plus rigides) de la languette déchirable 6. De cette manière, il est également possible d'obtenir une protection sûre contre le détachement non-intentionnel de la languette déchirable 6.

Les éléments ci-dessus décrivent un mode de réalisation d'une unité de grille de radiateur 1, laquelle comporte trois éléments de grille 2, 3, 4 reliés entre eux de manière amovible à l'aide d'une section de liaison 5. Cette description ne revêt toutefois pas un caractère limitatif et l'unité de grille de radiateur 1 peut également comporter plus de trois éléments de grille reliés entre eux. Un arrangement d'une unité de grille de radiateur ne comportant que deux éléments de grille reliés entre eux est également envisageable. De plus, les enseignements du présent document ne se limitent pas à des arrangements dans lesquels la liaison est agencée entre respectivement deux éléments de grille 2, 3 ou 3, 4 voisins en tant que section de liaison 5 afin de créer une liaison amovible. Ainsi, il est également envisageable de prévoir une liaison amovible de ce type à l'aide de la section de liaison 5 uniquement entre deux des éléments de grille 2, 3 ou 3, 4 de l'unité de grille de radiateur 1, et de réaliser la ou les autres liaisons entre un ou plusieurs autres éléments de grille en tant que liaison rigide, qui ne peut pas ou ne doit pas être détachée ou autrement séparée.

Bien que la description ci-dessus aient décrit une unité de grille de radiateur comme un mode de réalisation préféré, la présente divulgation n'est pas limitée à cela et les enseignements contenus dans la description peuvent également être appliqués à d'autres caches pour véhicules à moteur, dans lesquels plusieurs éléments de cache, tels que des éléments de revêtement ou de remplissage, doivent être montés sur un véhicule à moteur dans des ouvertures prévues à cet effet.

### Liste des numéros de référence

- 1: Unité de grille de radiateur
- 2: Élément de grille central
- 3,: 4 Éléments de grille latéraux
- 5: Section de liaison
- 6: Languette déchirable
- 7: Passage
- 8: Pince en « U » - protection contre la torsion
- 9: Traverses de protection contre la torsion
- 10: Éléments en forme de plaque
- 11: Section de charnière-film

## Revendications

1. Unité de cache destinée à être montée sur un véhicule à moteur, l'unité de cache comportant au moins deux éléments de cache,
l'unité de cache étant formée d'un seul tenant,
deux éléments de cache de au moins deux éléments de cache étant reliés l'un à l'autre de manière amovible à l'aide d'une section de liaison (5),
**caractérisée en ce que** la section de liaison (5) comporte une languette déchirable (6), le déchirage de la languette déchirable (6) provoquant le détachement de la liaison..

2. Unité de cache selon la revendication 1, **caractérisée en ce que** l'unité de cache est formée en tant qu'unité de grille de radiateur (1) destinée à être montée sur un système de pare-chocs se trouvant au niveau de l'avant d'un véhicule à moteur, les éléments de cache étant formés en tant qu'éléments de grille (2, 3, 4).

3. Unité de cache selon l'une des revendications précédentes, **caractérisée en ce que** la languette déchirable (6) est formée avec un anneau de saisie.

4. Unité de cache selon l'une des revendications précédentes, **caractérisée en ce que** la section de liaison (5) est réalisée sous la forme d'une charnière-film ou comprend une section partielle réalisée sous la forme d'une charnière-film, la languette déchirable (6) étant réalisée sous la forme d'une section de la charnière-film définie par des perforations et/ou des rainures.

5. Unité de cache selon l'une des revendications précédentes, **caractérisée en ce que** la languette déchirable possède une longueur comprise entre 3 et 15 cm, de manière préférée une longueur comprise entre 5 et 10 cm.

6. Unité de cache selon l'une des revendications précédentes, **caractérisée en ce qu'**il est prévu d'autres moyens de protection contre un détachement involontaire de la languette déchirable (6).

7. Unité de cache selon la revendication 6, les agents de protection contre un détachement non-intentionnel de la languette déchirable (6) sont formés en pince en « U » (8), laquelle est enfichée sur la languette déchirable (6) et sur une zone adjacente de la section de liaison (5) respectivement latérale à la languette déchirable (6), la pince en « U » (8) contrant, en état enfiché, une torsion les uns par rapport aux autres des éléments de cache reliés entre eux par la section de liaison (5), la pince en « U » (8) pouvant être retirée afin de libérer la languette déchirable (6) pour déchirer celle-ci.

8. Unité de cache selon la revendication 6, dans laquelle les moyens de protection contre un détachement involontaire de la languette déchirable (6) peuvent comporter une pluralité de traverses (9) qui s'étendent de manière sensiblement parallèle à la languette déchirable (6), au moins une des traverses (9) étant agencée sur chacun des éléments de cache reliés les uns aux autres par la section de liaison (5), et les traverses (9) agencées se chevauchant au moins partiellement sur les éléments de cache reliés et étant écartés afin d'entrer en contact les unes par rapport aux autres en cas de torsion des éléments de cache reliés entre eux, afin de contrer une torsion supplémentaire.

9. Unité de cache selon la revendication 6, dans laquelle les moyens de protection contre le détachement non-intentionnel de la languette déchirable (6) peuvent comporter une pluralité d'éléments en forme de plaque (11), qui sont reliés entre eux par des sections de charnière-film.

10. Procédé de montage d'une unité de cache sur un système de pare-chocs se trouvant au niveau de l'avant d'un véhicule à moteur, **caractérisé par** les étapes :
fournir une unité de cache selon l'une des revendications 1 à 9 ;
détacher la/les liaison(s) détachables entre les éléments de cache ; et
insérer et monter les éléments de cache dans les ouvertures prévues pour les recevoir.

11. Procédé selon la revendication 10, **caractérisé en ce que** le détachement de la/des liaison(s) s'effectue après la fourniture et avant l'insertion et le montage des éléments de cache.

12. Procédé selon la revendication 10, **caractérisé en ce qu'**un premier des éléments de cache est d'abord inséré et monté dans l'ouverture prévue pour le recevoir,
la liaison détachable entre le premier élément de cache et un second élément de cache relié à celui-ci est détachée, et
le second élément de cache est inséré et monté dans l'ouverture prévue pour le recevoir.

13. Procédé selon la revendication 12, **caractérisé en ce que** l'unité de cache comprend trois éléments de cache,
la liaison détachable entre le premier ou de deuxième élément de cache et le troisième élément de cache relié à celui-ci est détachée, et
le troisième élément de cache est inséré et monté dans l'ouverture prévue pour le recevoir.

14. Procédé selon l'une des revendications 10 à 13, **caractérisée en ce que** l'unité de cache est formée en tant qu'unité de grille de radiateur (1) destinée à être montée sur un système de pare-chocs se trouvant au niveau de l'avant d'un véhicule à moteur, les éléments de cache étant formés en tant qu'éléments de grille (2, 3, 4), et les éléments de grille (2, 3, 4) sont respectivement insérés et montés dans les ouvertures du système de pare-chocs prévues à cet effet.

15. Véhicule à moteur comportant une unité de cache selon l'une des revendications 1 à 9, l'unité de cache étant montée selon le procédé selon l'une des revendications 10 à 14.

## Patentansprüche

1. Abdeckeinheit zur Montage an einem Kraftfahrzeug, wobei die Abdeckeinheit mindestens zwei Abdeckelemente aufweist, wobei
die Abdeckeinheit ist in einem Stück geformt,
zwei Abdeckelemente von mindestens zwei Abdeckelementen, die mittels eines Verbindungsabschnitts (5) lösbar miteinander verbunden sind,
**dadurch gekennzeichnet, dass** der Verbindungsabschnitt (5) eine Abreißlasche (6) aufweist, wobei das Abreißen der Abreißlasche (6) das Lösen der Verbindung bewirkt.

2. Abdeckeinheit nach Anspruch 1, **dadurch gekennzeichnet, dass** die Abdeckeinheit als Kühlergrilleinheit (1) zur Montage an einem an der Vorderseite eines Kraftfahrzeugs befindlichen Stoßfängersystem ausgebildet ist, wobei die Abdeckelemente als Gitterelemente (2, 3, 4) ausgebildet sind.

3. Abdeckeinheit nach einem der vorhergehenden Ansprüche, **dadurch gekennzeichnet, dass** die Abreißlasche (6) mit einem Greifring ausgebildet ist.

4. Abdeckeinheit nach einem der vorhergehenden Ansprüche, **dadurch gekennzeichnet, dass** der Verbindungsabschnitt (5) als Filmscharnier ausgebildet ist oder einen als Filmscharnier ausgebildeten Teilabschnitt aufweist, wobei die Abreißlasche (6) als ein durch Perforationen und/oder Rillen definierter Abschnitt des Filmscharniers ausgebildet ist.

5. Abdeckeinheit nach einem der vorhergehenden Ansprüche, **dadurch gekennzeichnet, dass** die abreißbare Lasche eine Länge zwischen 3 und 15 cm, vorzugsweise eine Länge zwischen 5 und 10 cm aufweist.

6. Abdeckeinheit nach einem der vorhergehenden Ansprüche, **dadurch gekennzeichnet, dass** weitere Mittel zum Schutz gegen unbeabsichtigtes Lösen der Abreißlasche (6) vorgesehen sind.

7. Abdeckeinheit nach Anspruch 6, wobei die Schutzmittel gegen unbeabsichtigtes Lösen der Abreißlasche (6) als "U"-Klemme (8) ausgebildet sind, der auf die Abreißlasche (6) und auf einen angrenzenden Bereich des Verbindungsabschnitts (5) jeweils seitlich der Abreißlasche (6) aufgesteckt ist, der "U"- Klemme (8) im eingesteckten Zustand einer Verdrehung der durch den Verbindungsabschnitt (5) miteinander verbundenen Abdeckelemente entgegenwirkt, wobei der "U"- Klemme (8) entfernt werden kann, um die Abreißlasche (6) zum Aufreißen derselben freizugeben.

8. Abdeckeinheit nach Anspruch 6, wobei die Mittel zum Schutz gegen unbeabsichtigtes Lösen der Abreißlasche (6) mehrere Stege (9) aufweisen können, die sich im Wesentlichen parallel zur Abreißlasche (6) erstrecken, wobei mindestens einer der Stege (9) an jedem der durch den Verbindungsabschnitt (5) miteinander verbundenen Abdeckelemente angeordnet ist und die Stege (9) zumindest teilweise überlappend auf den verbundenen Abdeckelementen angeordnet sind und voneinander beanstandet sind, um sich im Falle einer Verdrehung der verbundenen Abdeckelemente zu berühren, um einer weiteren Verdrehung entgegenzuwirken.

9. Abdeckeinheit nach Anspruch 6, wobei die Mittel zum Schutz gegen unbeabsichtigtes Lösen der Abreißlasche (6) aus mehreren plattenförmigen Elementen (11) bestehen können, die durch Scharnierfolienabschnitte miteinander verbunden sind.

10. Verfahren zur Montage einer Abdeckeinheit an einem Stoßfängersystem, das sich an der Vorderseite eines Kraftfahrzeugs befindet, **gekennzeichnet durch** die folgenden Schritte:
Bereitstellen einer Abdeckeinheit nach einem der Ansprüche 1 bis 9;
Lösen der lösbaren Verbindung(en) zwischen den Abdeckelementen; und
Einsetzen und Montieren der Abdeckelemente in die dafür vorgesehenen Öffnungen.

11. Verfahren nach Anspruch 10, **dadurch gekennzeichnet, dass** das Lösen der Verbindung(en) nach der Versorgung und vor dem Einsetzen und Montieren der Abdeckelemente erfolgt.

12. Verfahren nach Anspruch 10, **dadurch gekennzeichnet, dass** zunächst ein erstes der Abdeckelemente eingesetzt und in die dafür vorgesehene Öffnung montiert wird, die lösbare Verbindung zwischen dem ersten Abdeckelement und einem damit verbundenen zweiten Abdeckelement gelöst wird, und
das zweite Abdeckelement in die Aufnahmeöffnung eingesetzt und montiert wird.

13. Verfahren nach Anspruch 12, **dadurch gekennzeichnet, dass** die Abdeckeinheit drei Abdeckelemente aufweist,
die lösbare Verbindung zwischen dem ersten oder zweiten Abdeckelement und dem damit verbundenen dritten Abdeckelement gelöst wird, und
das dritte Abdeckelement in die dafür vorgesehene Öffnung eingesetzt und montiert wird.

14. Verfahren nach einem der Ansprüche 10 bis 13, **dadurch gekennzeichnet, dass** die Abdeckeinheit als Kühlergrilleinheit (1) zur Montage an einem an der Vorderseite eines Kraftfahrzeuges befindlichen Stoßfängersystem ausgebildet ist, wobei die Abdeckelemente als Grillelemente (2, 3, 4) ausgebildet sind und die Grillelemente (2, 3, 4) jeweils in die dafür vorgesehenen Öffnungen des Stoßfängersystems eingesetzt und montiert werden.

15. Kraftfahrzeug mit einer Abdeckeinheit nach einem der Ansprüche 1 bis 9, wobei die Abdeckeinheit nach dem Verfahren nach einem der Ansprüche 10 bis 14 montiert wird.

## Claims

1. Cover unit for mounting on a motor vehicle, the cover unit comprising at least two cover elements, the cover unit being formed in one piece, two cover elements of at least two cover elements being detachably connected to one another by means of a connecting section (5), **characterized in that** the connecting section (5) has a tear-off tab (6), the tearing off of the tear-off tab (6) causing the connection to be detached.

2. Cover unit according to claim 1, **characterized in that** the cover unit is formed as a radiator grille unit (1) for mounting on a bumper system located at the front of a motor vehicle, wherein the cover elements are formed as grille elements (2, 3, 4).

3. Cover unit according to any of the preceding claims, **characterized in that** the tear-off tab (6) is formed with a grip ring.

4. Cover unit according to any of the preceding claims, **characterized in that** the connecting section (5) is formed as a film hinge or comprises a partial section formed as a film hinge, the tear-off tab (6) being formed as a section of the film hinge defined by perforations and/or grooves.

5. Cover unit according to any of the preceding claims, **characterized in that** the tear-off tab has a length comprised between 3 and 15 cm, preferably a length comprised between 5 and 10 cm.

6. Cover unit according to any of the preceding claims, **characterized in that** further means are provided to protect against unintentional detachment of the tear-off tab (6).

7. Cover unit according to claim 6, wherein the protective agents against unintentional detachment of the tear-off tab (6) are formed as a "U" clamp (8), which is plugged onto the tear-off tab (6) and onto an adjacent region of the connecting section (5) respectively lateral to the tear-off tab (6), the U-shaped clamp (8) counteracts, in the plugged state, a twisting of the cover elements connected to one another by the connecting section (5), the U-shaped clamp (8) being removable in order to release the tear-off tab (6) for tearing the latter.

8. Cover unit according to claim 6, wherein the protective agents against unintentional detachment of the tear-off tab (6) may comprise a plurality of crosspieces (9) that extend substantially parallel to the tear-off tab (6), at least one of the crosspieces (9) being arranged on each of the cache elements connected to each other by the connecting section (5), and the crosspieces (9) being arranged at least partially overlapping on the connected cover elements and being spaced apart in order to contact each other in case of twisting of the connected cover elements, in order to counteract further twisting.

9. Cover unit according to claim 6, wherein the protective agents against unintentional detachment of the tear-off tab (6) may comprise a plurality of plate-like elements (11), which are connected to each other by film-hinge sections.

10. Method for mounting a cover unit on a bumper system located at the front of a motor vehicle, **characterized by** the steps:
providing a cover unit according to any of claims 1 to 9;
detaching the tear-off connection(s) between the cover elements; and
inserting and mounting the cover elements in the openings provided for receiving them.

11. Method according to claim 10, **characterized in that** the tearing-off of the connection(s) is performed after the supply and before the insertion and mounting of the cover elements.

12. Method of claim 10, **characterized in that** a first of the cover elements is first inserted and mounted in the opening provided for receiving it, the tear-off connection between the first cover element and a second cover element connected thereto is detached, and the second cover member is inserted and mounted in the opening provided to receive it.

13. Method according to claim 12, **characterized in that** the cover unit comprises three cover elements, the detachable connection between the first or second cover element and the third cover element connected thereto is detached, and the third cover element is inserted and mounted in the opening provided for receiving it.

14. Method according to any of claims 10 to 13, **characterized in that** the cover unit is formed as a radiator grille unit (1) for mounting on a bumper system located at the front of a motor vehicle, wherein the cover elements are formed as grille elements (2, 3, 4), and the grille elements (2, 3, 4) are each inserted and mounted in the openings of the bumper system provided for this purpose.

15. Motor vehicle with a cover unit according to any of claims 1 to 9, wherein the cover unit is mounted according to the method according to any of claims 10 to 14.
